# EUROPÄISCHE PATENTSCHRIFT

(11) **EP 2 107 323 B1**
(45) Veröffentlichungstag und Bekanntmachung des Hinweises auf die Patenterteilung: **24.10.2018**
(21) Anmeldenummer: 09450071.7
(22) Anmeldetag: 02.04.2009
(51) Int. Cl.: F25B 29/00

(54) **Vorrichtung zur Erzeugung von Kalt- und Warmwasser**
Device for producing cold and hot water
Dispositif de production d'eau froide et chaude

(30) Priorität: 03.04.2008 AT 5312008
(43) Veröffentlichungstag der Anmeldung: 07.10.2009
(73) Patentinhaber: Aschauer, Rudolf, 4362 Bad Kreuzen (AT)
(72) Erfinder: Aschauer, Rudolf, 4362 Bad Kreuzen (AT)
(74) Vertreter: Patentanwaltskanzlei Hübscher

(56) Entgegenhaltungen:
- CN-Y- 2 393 018
- CN-Y- 2 879 027
- DE-U1- 20 203 713
- FR-A7- 2 391 628
- JP-A- 56 162 332

## Beschreibung

Die Erfindung betrifft eine Vorrichtung zur Erzeugung von Kalt- und Warmwasser für eine Verbrauchsstelle mit einer Zulaufleitung und mit einer an die Zulaufleitung angeschlossenen Wärmepumpe, die zur Erzeugung des Warmwassers mit ihrer Warmseite einen Teil des Zulaufwassers der Zulaufleitung erwärmt und zur Erzeugung des Kaltwassers mit ihrer Kaltseite einen anderen Teil des Zulaufwassers der Zulaufleitung abkühlt, wobei die Vorrichtung eine Einrichtung zum Erwärmen des Zulaufwassers der Zulaufleitung umfasst, die vor der Wärmepumpe das Zulaufwasser vorzugsweise auf 20 bis 30 Grad Celsius erwärmt. Um einer Verbrauchsstelle Kalt- und Warmwasser zur Verfügung stellen zu können, ist es aus dem Stand der Technik bekannt, der Verbrauchsstelle zwei getrennte Leitungen mit Kalt- und Warmwasser zuzuführen. Zu diesem Zweck wird die Kaltwasserleitung mit Frischwasser und Warmwasserleitung mit erwärmtem Frischwasser beschickt. Von Nachteil bei derartigen Vorrichtungen ist, dass einerseits bei der Verbrauchsstelle nur Kaltwasser in der vorgegebenen Temperatur des Frischwassers zur Verfügung steht und andererseits, dass beim Zuleiten des Warmwassers zur Verbrauchsstelle mit vergleichsweise hohen Wärmeverlusten gerechnet werden muss. Außerdem kommt noch hinzu, dass bei vergleichsweise langen Wasserleitungen eine erhebliche Wassermenge an Warmwasser vergeudet wird, weil durch eine Abkühlung in der Leitung bedingt erst mit einer gewissen Vorlaufzeit das Warmwasser bei der Verbrauchsstelle auf Temperatur gebracht werden kann.

Weiters ist es zur Erzeugung von Kalt- und Warmwasser aus dem Stand der Technik bekannt (DE 25 54 441 A1), in einer Zulaufleitung eine Wärmepumpe anzuschließen, mit der Warm- und Kaltwasser erzeugt werden kann. Zu diesem Zweck erwärmt die Wärmepumpe mit ihrer Warmseite einen Teil des Wassers der Zulaufleitung und gleichzeitig mit ihrer Kaltseite einen anderen Teil des Wassers der Zulaufleitung. Damit kann beispielsweise die durchschnittliche Temperatur einer Zulaufleitung von 16° C auf 5° C für das Kaltwasser bzw. 50° C für das Warmwasser gebracht werden. Zwar kann damit die Kaltwassertemperatur für das zulaufende Frischwasser gesenkt werden, derartige Vorrichtungen weisen jedoch einen vergleichsweise hohen Energieaufwand auf.
Eine Wärmepumpe, wie sie zur Herstellung von Warmwasser verwendet wird, ist aus der CN 2879027 Y bekannt. Eine Aufsplittung des Zulaufwassers und eine Erwärmung eines Teils zur Abkühlung eines anderen Teiles ist gemäß dieser Druckschrift nicht vorgesehen. Allerdings kennt diese bekannte Druckschrift eine Vorrichtung zum Erwärmung des Zulaufwassers für das Heißwasser.
Die Erfindung hat sich daher ausgehend vom eingangs geschilderten Stand der Technik die Aufgabe gestellt, eine Vorrichtung zur Erzeugung von Heiß- und Kaltwasser dermaßen auszugestalten, dass einerseits Temperaturverluste so gering wie möglich gehalten werden können und andererseits auch ein geringer Wasserverbrauch gewährleistet wird. Außerdem soll die Vorrichtung eine hohe Energieeffizienz aufweisen.

Die Erfindung löst die gestellte Aufgabe durch die Merkmale des Anspruchs 1.

Umfasst die Vorrichtung eine Einrichtung zum Erwärmen des Zulaufwassers, die vor der Wärmepumpe das Zulaufwasser erwärmt, so kann im Gegensatz zu bekannten Vorrichtungen eine verbesserte Energieeffizienz erreicht werden. Es kann nämlich das Zulaufwasser gleichmäßiger von der Wärmepumpe temperaturbeaufschlagt werden, was es auch beispielsweise möglich machen kann, eine leistungsverminderte Wärmepumpe einzusetzen. Vorteilhaft hat sich eine Erwärmung des Zulaufwassers auf 20 bis 30 Grad Celsius herausgestellt. Denn gerade in der Nähe der Zimmertemperatur, beispielsweise bei 22 Grad Celsius, kann die Energiebilanz der Vorrichtung mit einer verminderten Wärmeabstrahlung des Zulaufwassers beim Transport bis zur Wärmepumpe verbessert werden. Außerdem kann auch auf vergleichsweise lange Zulaufleitung für Warm- und Kaltwasser verzichtet werden, weil mit der einen Zulaufleitung eine Wärmepumpe bzw. die Verbrauchsstelle in ausreichendem Ausmaß mit Wasser versorgt werden kann. Die bekannten Wärmeverluste von zwei vergleichsweise lang nebeneinander laufenden und auch in der Temperatur vergleichsweise unterschiedlichen Wasserleitungen können so vermieden werden, was vorteilhaft sein kann.

Um die Energieeffizienz der Vorrichtung zu erhöhen, wird mit Hilfe der Wärme des Abflusswassers der Abflussleitung von der Verbrauchsstelle für das Warm- und Kaltwasser das Zulaufwasser der Einrichtung erwärmt, weil damit die ungenützte Wärme des Abwassers zur Erhöhung der Temperatur des Zulaufwassers herangezogen werden kann.

Um die Verluste an Wärme- bzw. Kälte noch weiter zu reduzieren sind die Wärmepumpe im Bereich der Verbrauchsstelle und die Einrichtung zum Erwärmen des Zulaufwassers beabstandet von der Wärmepumpe angeordnet. Die Leitungen für Kalt- und Warmwasser können daher kurzgehalten werden, was die Wärmeverluste der Vorrichtung noch weiter vermindern kann.

Sind mehrere je im Bereich einer Verbrauchsstelle angeordnete Wärmepumpen an eine Einrichtung zum Erwärmen des Zulaufwassers angeschlossen, so können die Wärmepumpen dezentral zu bzw. zu verschiedenen Verbrauchsstellen angeordnet werden, und die Einrichtung als zentrales Mittel zum Erwärmen bzw. Vorwärmen des Zulaufwassers für diese daran angeschlossenen Wärmepumpen genützt werden, was eine besondere Energieeffizienz bzw. besondere Konstruktionseigenschaften schafft.

Ist eine öffnenbare Rückleitung mit der Kaltwasserleitung und der Einrichtung zum Erwärmen des Zulaufwassers verbunden, wobei gegebenenfalls über diese Rückleitung Kaltwasser von der Wärmepumpe zur Einrichtung zugeleitet werden, so kann erfindungsgemäß unabhängig von der Kaltwasserzeugung eine erhöhte Menge an Warmwasser erzeugt werden, weil nämlich das nicht verbrauchte Kaltwasser zur Verbrauchsstelle abgeführt werden kann. Außerdem kann so die Energieeffizienz der Wärmepumpe erhöht werden, weil die Kaltseite der Wärmepumpe mit erwärmtem Frischwasser beaufschlagt wird. Im äußersten Fall kann so die Wärmepumpe ausschließlich als Heizung für das Zulaufwasser bzw. auch als Raumheizung verwendet werden.

Die Energieeffizienz der Wärmepumpe kann weiters verbessert werden, indem die Wärmepumpe wenigstens einen Wasserspeicher für das Zulaufwasser aufweist, der von der Warm- oder von der Kaltseite der Wärmepumpe temperaturbeaufschlagt ist. Es kann sohin erfindungsgemäß möglich sein, auch mit einer leistungsgeringen Wärmepumpe erhöhte Mengenanforderungen an Kalt- und Warmwasser nachzukommen, weil der Wasserspeicher in der Art eines Puffers erhöhte Mengenanforderungen ausgleichen kann. Vorstellbar ist bei der Warmseite einen Wasserspeicher vorzusehen, es kann aber auch für die Warm- und für die Kaltseite je ein Wasserspeicher bestehen.

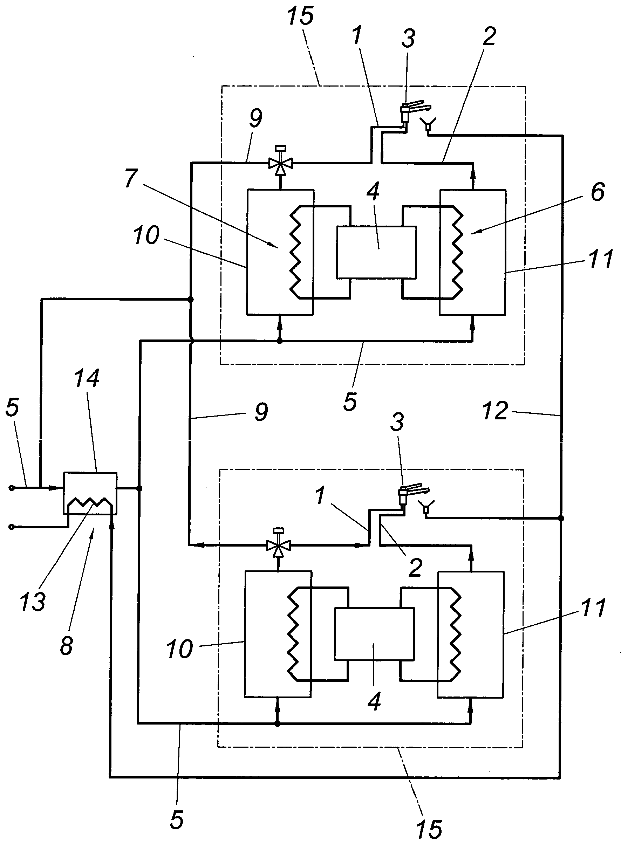

In der Figur ist die Vorrichtung zum Erzeugen von Kalt- und Warmwasser beispielsweise anhand eines Ausführungsbeispiels dargestellt.

Die beispielsweise dargestellte Vorrichtung zur Erzeugung von Kalt- und Warmwasser, geführt in einer Kaltwasserleitung 1 bzw. einer Warmwasserleitung 2, für eine Verbrauchsstelle 3 weist eine Wärmepumpe 4 auf, die an eine Zulaufleitung 5 angeschlossen ist. Solch eine Wärmepumpe 4 kann beispielsweise nach dem Kompressions-, Absorption- oder Adsorptionsverfahren arbeiten. Auch sind Peltier Elemente hierfür vorstellbar. Die Wärmepumpe 4 beaufschlagt mit ihrer Warmseite 6 das Zulaufwasser der Zulaufleitung 5 und erwärmt das Zulaufwasser auf eine vorgegebene Temperatur des Warmwassers der Warmwasserleitung 2. Auf der anderen Seite kühlt die Wärmepumpe 4 mit ihrer Kaltseite 7 das Zulaufwasser der Zulaufleitung 5 auf die gewünschte Temperatur des Kaltwassers der Kaltwasserleitung 1 ab. Um die Energieeffizienz der Wärmepumpe 4 zu verbessern, wird die Vorrichtung erfindungsgemäß mit einer Einrichtung 8 zum Erwärmen des Zulaufwassers der Zulaufleitung 5 ergänzt. Die Einrichtung 8 erwärmt das Zulaufwasser der Zulaufleitung 5 auf eine entsprechende Temperatur, so dass die Wärmepumpe 4 mit einem erwärmten Zulaufwasser der Zulaufleitung 5 versorgt wird. Die Temperatur des Zulaufwassers kann so eingestellt werden, dass für die Erzeugung von Kalt- und Warmwasser die Wärmepumpe 4 eine optimale Ausgangstemperatur hat. Bei einer gewünschten Warmwassertemperatur von 50° C und einer Kaltwassertemperatur von 7 bis 10° C hat sich eine Temperatur des Zulaufwassers von 20 bis 30° C, insbesondere 22° C herausgestellt. Vorteilhafte Bedingungen ergeben sich, wenn das Zulaufwasser 20 bis 30 Grad Celsius bei Kaltwasser unter 11 Grad Celsius und Warmwasser über 39 Grad Celsius aufweist. Denn das Zulaufwasser weist dann ungefähr Raumtemperatur auf, was eine Isolation der Zulaufleitung 5 unnötig macht und insbesondere Wärmeverluste beim Transport des Zulaufwassers zur Wärmepumpe 4 vermeidet.

Die Wärmepumpe 4 ist im Bereich der Verbrauchsstelle 3 und die Einrichtung 8 beabstandet von der Wärmepumpe 4 angeordnet. Diese Anordnung hat sich als besonders vorteilhaft bei mehreren Verbraucherstellen 3 mit je einer Wärmepumpe 4 herausgestellt, da zentral für die Wärmepumpen 4 das Zulaufwasser erhitzt werden kann. Diese bereichsweise bzw. dezentrale Anordnung von mehreren Verbraucherstellen 3 ist strichpunktiert mit Bezugszeichen 15 angedeutet. Vorteilhaft bei dieser Anordnung ist, dass die Kalt- und Warmwasserleitungen 1 und 2 vergleichsweise kurzgehalten werden können und somit verminderten Wärmeverlusten zu rechnen ist.

Eine öffnenbare Rückleitung 9, beispielsweise öffnenbar über ein Ventil, verbindet die Kaltwasserleitung 1 mit der Einrichtung 8 dermaßen, dass das der Einrichtung 8 zugeführte Zulaufwasser der Zulaufleitung 5 mit dem Kaltwasser der Kaltwasserleitung 1 gemischt werden kann. Dadurch kann erfindungsgemäß auch ein erhöhter Bedarf an Warmwasser der Warmwasserleitung 2 abgedeckt werden. Außerdem kann in dieser Rückleitung 9 auch eine nicht näher dargestellte Pumpe vorgesehen werden.

Zur Erhöhung der Energieeffizienz weist die Wärmepumpe 4 zwei Wasserspeicher 10 und 11 für das Zulaufwasser der Zulaufleitung 5 auf. Der Wasserspeicher 10 ist für das Kaltwasser der Kaltwasserleitung 1 und der Wasserspeicher 11 ist für das Warmwasser der Warmwasserleitung 2 vorgesehen.

Des Weiteren kann die Abwassertemperatur zur Erhöhung der Temperatur des Zulaufwassers herangezogen werden, indem die Abflussleitung 12 der Verbrauchsstellen 3 über einen Wärmetauscher 13 geführt wird.

Bekanntermaßen kann solch eine Einrichtung 8 zum Erwärmen eines Zulaufwassers auch in Form eines Boilers 14 vorgesehen sein, bei dem auch andere Heizmittel zur Erwärmung des Zulaufwassers der Zulaufleitung 5 vorgesehen sein können, insbesondere eine Solarheizung, was hier nicht näher dargestellt worden ist. Außerdem kann die Wärme der Wärmepumpe 4 auch zur Raumheizung oder für eine weitere Wärmepumpe, zum Beispiel unter Einbeziehung der Luft als Beaufschlagungsmedium, herangezogen werden. Des Weiteren kann auch die Kaltseite zum Kühlen von Räumen herangezogen werden. Hinzu kommt, dass die Warmseite 6 bzw. Kaltseite 7 der Wärmepumpe 4 auch über Pufferlösungen das Zulaufwasser mit Temperatur beaufschlagen können, was hier nicht näher dargestellt worden ist.

## Patentansprüche

1. Vorrichtung zur Erzeugung von Kalt- und Warmwasser für eine Verbrauchsstelle (3) mit einer Kaltwasserleitung (1) und mit einer Warmwasserleitung (2), mit einer Zulaufleitung (5) und mit einer an die Zulaufleitung (5) angeschlossenen Wärmepumpe (4), die zur Erzeugung des Warmwassers der Warmwasserleitung (2) mit ihrer Warmseite (6) einen Teil des Zulaufwassers der Zulaufleitung (5) erwärmt und zur Erzeugung des Kaltwassers der Kaltwasserleitung (1) mit ihrer Kaltseite (7) einen anderen Teil des Zulaufwassers der Zulaufleitung (5) abkühlt, wobei die Vorrichtung eine Einrichtung (8) zum Erwärmen des Zulaufwassers der Zulaufleitung (5) umfasst, die vor der Wärmepumpe (4) das Zulaufwasser vorzugsweise auf 20 bis 30 Grad Celsius erwärmt, **dadurch gekennzeichnet, dass** mit Hilfe der Wärme des Abflusswassers feiner Abflussleitung (12) von der Verbrauchsstelle für das Warm- und Kaltwasser das Zulaufwasser der Einrichtung (8) erwärmt wird.

2. Vorrichtung nach Anspruch 1, **dadurch gekennzeichnet, dass** die Wärmepumpe (4) im Bereich der Verbrauchsstelle (3) und die Einrichtung (8) zum Erwärmen des Zulaufwassers beabstandet von der Wärmepumpe (4) angeordnet sind.

3. Vorrichtung nach Anspruch 2, **dadurch gekennzeichnet, dass** mehrere je im Bereich einer Verbrauchsstelle (3) angeordnete Wärmepumpen (4) an eine Einrichtung (8) zum Erwärmen des Zulaufwassers angeschlossen sind.

4. Vorrichtung nach Anspruch 1, 2 oder 3, **dadurch gekennzeichnet, dass** eine öffnenbare Rückleitung (9) mit der Kaltwasserleitung (1) und der Einrichtung (8) zum Erwärmen des Zulaufwassers verbunden ist, wobei gegebenenfalls über diese Rückleitung (9) Kaltwasser von der Wärmepumpe (4) zur Einrichtung zugeleitet werden kann.

5. Vorrichtung nach einem der Ansprüche 1 bis 4, **dadurch gekennzeichnet, dass** die Wärmepumpe (4) wenigstens einen Wasserspeicher (10 oder 11) für das Zulaufwasser aufweist, der von der Warm- oder von der Kaltseite der Wärmepumpe (4) temperaturbeaufschlagt ist.

## Claims

1. Device for producing cold and hot water for a point of consumption (3), having a cold water line (1) and a hot water line (2), having an intake line (5) and a heat pump (4) which is connected to the intake line (5) and heats a portion of the intake water of the intake line (5) in order to produce the hot water of the hot water line (2) with its hot side (6) and cools another portion of the intake water of the intake line (5) in order to produce the cold water of the cold water line (1) with its cold side (7), wherein the device comprises a unit (8) for heating the intake water of the intake line (5) which, upstream of the heat pump (4), heats the intake water preferably to 20 to 30 degrees Celsius, **characterised in that** the intake water of the unit (8) is heated using the heat of the drain water of a drain line (12) from the point of consumption for the hot and cold water.

2. Device as claimed in claim 1, **characterised in that** the heat pump (4) is arranged in the region of the point of consumption (3) and the unit (8) for heating the intake water is arranged spaced apart from the heat pump (4).

3. Device as claimed in claim 2, **characterised in that** a plurality of heat pumps (4) each arranged in the region of a point of consumption (3) are connected to a unit (8) for heating the intake water.

4. Device as claimed in claim 1, 2 or 3, **characterised in that** a return line (9), which can be opened, is connected to the cold water line (1) and the unit (8) for heating the intake water, wherein cold water can be fed from the heat pump (4) to the unit optionally via this return line (9).

5. Device as claimed in any one of claims 1 to 4, **characterised in that** the heat pump (4) comprises at least one water tank (10 or 11) for the intake water, the temperature of the water tank being influenced by the hot side or cold side of the heat pump (4).

## Revendications

1. Dispositif de production d'eau froide et chaude pour un lieu de consommation (3), avec une conduite d'eau froide (1) et avec une conduite d'eau chaude (2), muni d'une conduite d'arrivée (5) et muni d'une pompe à chaleur (4) connectée sur la conduite d'arrivée (5), laquelle échauffe une partie de l'eau entrante de la conduite d'arrivée (5) avec sa partie chaude (6) pour la génération de l'eau chaude de la conduite d'eau chaude (2) et laquelle réfrigère une autre partie de l'eau entrante de la conduite d'arrivée (5) avec sa partie froide (7) pour la génération de l'eau froide de la conduite d'eau froide (1), le dispositif comportant un dispositif (8) destiné à réchauffement de l'eau entrante de la conduite d'arrivée (5), lequel échauffe l'eau entrante de préférence de 20 à 30 degrés Celsius avant la pompe à chaleur (4), **caractérisé en ce que** l'eau entrante du dispositif (8) est échauffée à l'aide de la chaleur de l'eau d'écoulement d'une conduite d'évacuation (12) du lieu de consommation pour l'eau froide et chaude.

2. Dispositif selon la revendication 1, **caractérisé en ce que** la pompe à chaleur (4) dans la zone du lieu de consommation (3) et le dispositif (8) pour échauffer l'eau entrante sont disposés à distance de la pompe à chaleur (4).

3. Dispositif selon la revendication 2, **caractérisé en ce que** plusieurs pompes à chaleur (4) disposées respectivement dans la zone d'un lieu de consommation (3) sont raccordées au niveau d'un dispositif (8) destiné à l'échauffement de l'eau entrante.

4. Dispositif selon la revendication 1, 2 ou 3, **caractérisé en ce qu'**une conduite de retour (9) pouvant être ouverte est raccordée avec la conduite d'eau froide (1) et le dispositif (8) pour l'échauffement de l'eau entrante, le cas échéant, l'eau froide de la pompe à chaleur (4) pouvant être amenée par le biais de cette conduite de retour (9) au dispositif.

5. Dispositif selon l'une des revendications 1 à 4, **caractérisé en ce que** la pompe à chaleur (4) comporte au moins un réservoir d"eau (10 ou 11) pour l'eau entrante, qui est soumis thermiquement par la partie froide ou chaude de la pompe à chaleur (4).
